**Europäisches Patentamt**

**European Patent Office**

**Office européen des brevets**

(11) Veröffentlichungsnummer: **0 015 464**
A2

## (12) EUROPÄISCHE PATENTANMELDUNG

(21) Anmeldenummer: **80100904.4**

(22) Anmeldetag: **25.02.80**

(51) Int. Cl.³: **C 09 B 67/06,** C 09 B 67/42, D 06 L 3/12

(30) Priorität: **06.03.79 US 18044**

(43) Veröffentlichungstag der Anmeldung: **17.09.80** Patentblatt 80/19

(84) Benannte Vertragsstaaten: **CH DE FR GB**

(71) Anmelder: **Mobay Chemical Corporation, Penn Lincoln Parkway West, Pittsburgh, Pennsylvania 15205 (US)**

(72) Erfinder: **Sandefur, Charles William, 5306 Alvie St., Charleston, S.C. 29405 (US)**
Erfinder: **Lindow, Donald Frank, Dr., 605 Sanderling Court, Secaucus, N.J.07094 (US)**
Erfinder: **Thomas, Thomas James Dr., 213 Brailsford Ave., Summerville, S.C. 29 483 (US)**

(74) Vertreter: **Müller, Heinz-Gerd, Dipl.-Ing. et al, c/o Bayer AG Zentralbereich Patente Marken und Lizenzen, D-5090 Leverkusen 1, Bayerwerk (DE)**

(54) **Verfahren zur Herstellung von Farbstoffpulvern oder Farbstoffgranulaten.**

(57) Staubarme und nichtschäumende Farbstoffpräparationen erhält man auf einfache Weise, indem man Entstaubungsmittel und/oder Entschäumer in die Farbstoff-Lösungen oder -Dispersionen auf dem Weg vom Vorratsbehälter zum Trocknungsaggregat unmittelbar vor dem Trocknungsaggregat einspeist.

EP 0 015 464 A2

Verfahren zur Herstellung von Farbstoffpräparationen

Gegenstand der Erfindung ist ein Verfahren zur Herstellung von staubarmen und/oder weniger zum Schäumen neigenden Farbstoffpulvern oder -granulaten.

Bei der Verarbeitung von pulverförmigen oder granulierten Farbstoffpräparationen tritt sehr häufig eine unangenehme Staubentwicklung auf. Zubereitungen von Dispersionsfarbstoffen, die zur Gewährleistung einer ausreichenden Flottenstabilität größere Mengen Dispergiermittel enthalten, weisen darüber hinaus den Nachteil auf, daß sie im Färbebad eine mehr oder weniger starke Schaumbildung verursachen, was wiederum zu unegalen Färbungen führt.

Als besonders ungünstig wird das Schäumen der Färbeflotte beim sogenannten Jet-Färben empfunden.

Um diese unerwünschten Effekte zu unterdrücken, hat man bisher den Farbstoffpräparationen Entstaubungsmitteln und/oder Entschäumer zugesetzt.

Eine andere gebräuchliche Methode zur Unterdrückung der Schaumbildung besteht darin, daß man den Färbe-

Le A 19 745

bädern verhältnismäßig große Mengen Entschäumungsmittel zusetzt.

Die bisher bekannten Verfahren weisen jedoch zahlreiche Nachteile auf.

Setzt man beispielsweise Entstaubungsmittel bzw. Entschäumer dem fertigen Farbstoffpulver zu, so kommt es häufig zur Klumpenbildung, was wiederum Anlaß zu "stippigen" Färbungen gibt. Trägt man andererseits diese Hilfsmittel vor dem eigentlichen Trocknungsprozeß in die Vorratsbehälter mit der wäßrigen Farbstoffzubereitung ein, so beobachtet man sehr oft eine Aufrahmung dieser Mittel. Diese setzen sich dann teilweise an den Gefäßwänden oder am Gefäßdeckel ab und entziehen sich somit ihrer eigentlichen Funktionsausübung in der trockenen Farbstoffzubereitung. Auch der direkte Zusatz von meistens verhältnismäßig großen Mengen Entschäumern zur Färbeflotte löst nicht immer das vorliegende Problem, in dem die Schaumbildung oftmals nicht ausreichend gebremst wird und/oder sich Unverträglichkeiten mit den Farbstoffen einstellen - ganz abgesehen von der Unwirtschaftlichkeit des Einsatzes großer Mengen der relativ teuren Entschäumer.

Gemeinsam ist allen vorbekannten Methoden, daß sie einen zusätzlichen Arbeitsgang benötigen.

Es wurde nun gefunden, daß man auf einfache Weise unter Vermeidung der genannten Nachteile zu staub-

Le A 19 745

- 3 -

armen und weniger schäumenden Farbstoffpräparationen gelangt, wenn man Entstaubungsmittel und/oder Entschäumer in die Lösung, Emulsion oder Dispersion der Farbstoffe auf dem Weg vom Vorratsbehälter zum Trocknungsaggregat unmittelbar vor dem Trocknungsaggregat eingespeist.

Wichtig ist dabei, daß es zu einer innigen Vermischung der zugesetzten Hilfsmittel mit dem Farbstoff kommt. Falls daher die Turbulenz in den Rohrleitungen nicht stark genug ist, müssen geeignete Mischvorrichtungen - z.B. ein Statik-Mischer - eingebaut werden.

Durch diese Arbeitsweise wird gewährleistet, daß die Kontaktzeit zwischen Hilfsmittel und flüssiger Phase der Farbstoffzubereitung wesentlich verkürzt wird. Im allgemeinen reichen Kontaktzeiten von 1 Sekunde bis 7 Minuten, vorzugsweise 10 Sekunden bis 3 Minuten, aus, um den erwünschten Effekt zu erzielen.

Geeignete Trocknungsaggregate zur Durchführung des erfindungsgemäßen Verfahrens sind Sprühtrockner, Dünnschichtkontakttrockner, wie z.B. Walzentrockner, kontinuierlich arbeitende Schaufeltrockner und andere. Bevorzugt sind Sprühtrockner.

Zur Durchführung des Verfahrens sind keine besonderen apparativen Voraussetzungen zu schaffen. Es genügt, wenn man die Etnschäumer und/oder Entstaubungsmittel in den Produktenstrom einer üblichen kontinuierlich arbeitenden Trocknungsanlage auf der Druck- oder Saug-

Le A 19 745

seite der Versorgungspumpe mittels einer normalen Dosierpumpe einschleust.

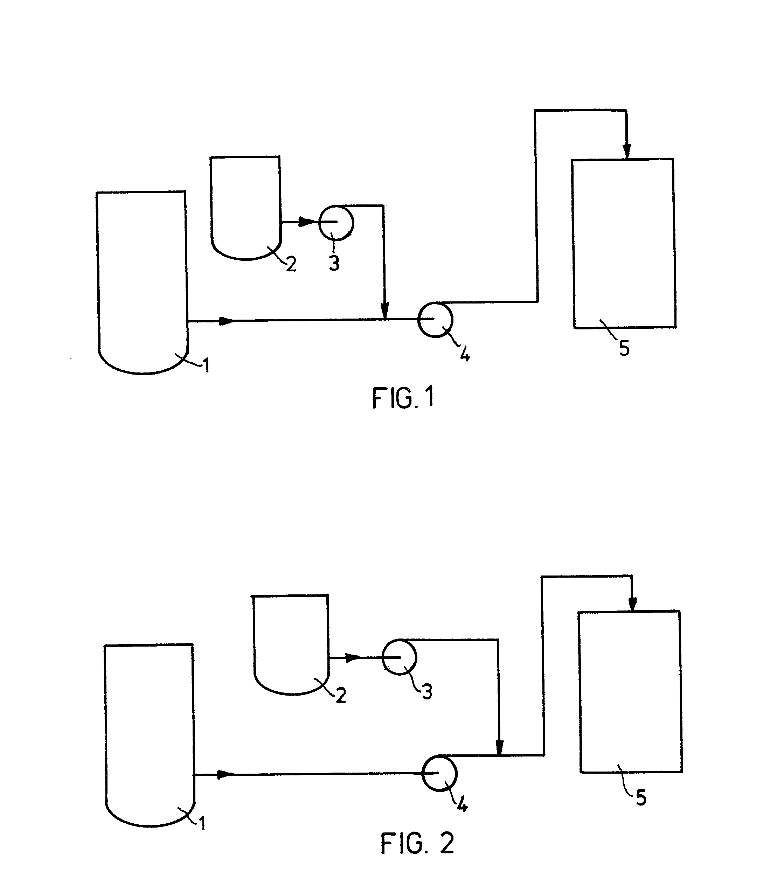

Figur 1 zeigt ein Beispiel für die Einspeisung auf der Saugseite, während in Figur 2 die Einspeisung auf der Druckseite erfolgt.

Geeignete Versorgungspumpen sind beispielsweise Kavitations- oder Zahnradpumpen.

Als Dosierpumpen kommen in Betracht: Kolben-, Zahnrad- oder Kavitationspumpen.

Das Verfahren eignet sich grundsätzlich zur Herstellung von Präparationen aller üblichen Farbstoffklassen. Von besonderem Interesse ist jedoch die Anwendung der neuen Methode bei der Herstellung von trockenen Präparationen wasserunlöslicher Farbstoffe.

Geeignete wasserunlösliche Farbstoffe sind handelsübliche Dispersionsfarbstoffe sowie Dispersionsaufheller. Geeignete Dispersionsfarbstoffe sind beispielsweise solche aus der Reihe der Azofarbstoffe, Anthrachinonfarbstoffe, Methinfarbstoffe, Chinophthalonfarbstoffe oder der Indigo- oder Thioindigofarbstoffe. Geeignete Dispersionsaufheller sind solche der Cumarin- oder Pyrazolinreihe.

Geeignete Entstaubungsmittel sind cyclische Kohlenwasserstoffe wie Decalin und Tetralin, Phthalsäure, Dialkylester und insbesondere Mineralöle, die zum Teil ansulfiert sind, mit einem Siedebereich von

Le A 19 745

130 bis 300°C bzw. Mischungen dieser Stoffe mit vorzugsweise nichtionogenen Emulgatoren.

Geeignete Entschäumer sind Fette, Fettalkohole, Fettsäuren bzw. deren Salze, Fettsäureester, Fettsäureamide, Trialkylphosphate, Paraffin- und Silikonöle oder deren Mischungen.

Die Menge der einzusetzenden Entschäumer bzw. Entstaubungsmittel kann innerhalb der üblichen Intervalle schwanken. Im allgemeinen arbeitet man mit 0,1 bis 2 Gew.-% - bezogen auf den reinen Farbstoff. Das erfindungsgemäße Verfahren sei anhand der nachfolgenden Beispiele näher erläutert.

Le A 19 745

## Beispiel 1

113 g eines wasserfeuchten Filterpreßkuchens von Disperse Blue 56 (Feststoffgehalt 27,8 %) werden mit 251 g Ligninsulfonat in einem Mischer zusammen mit 100 ml Wasser zu einer fließfähigen Masse verarbeitet. Diese wird anschließend in einer Rotor/Stator-Kolloidmühle und danach in einer Permühle unter Verwendung von 1 mm-Glaskugeln 30 Minuten lang bei 20 bis 30°C gemahlen. Man erhält 664 g einer Farbstoffdispersion mit einer durchschnittlichen Teilchengröße von 0,3μ. Diese Dispersion wird mit einer Verdrängerpumpe auf die Zerstäuberscheibe eines Sprühtrockners gepumpt. Dabei wird eine 7,7 %ige wäßrige Emulsion eines Entschäumers, bestehend aus 7,1 % Silikagel, 12,8 % leichtes Mineralöl, 75,0 % niedrig-oxalkylierte Fettalkohole und 5,1 % oxalkylierter Polyethylenglykolester, in die Versorgungsleitung gemäß Schema Nr. 2 eingeschleust. Pro 100 ml Farbstoffdispersion werden kontinuierlich 14 ml Entschäumeremulsion zugefügt, so daß der den Sprühtrockner als Pulver verlassende Farbstoff 2 Gew.-% des Entschäumers enthält. Die Eingangstemperatur des Sprühtrockners wird dabei bei 220°C und die Ausgangstemperatur bei 90°C gehalten.

## Schaumtest

1 g des erhaltenen Farbstoffpulvers wird bei 50°C in einem 400 ml Becherglas mit 25 ml destilliertem Wasser angerührt. Die erhaltene Mischung wird dann mit weiteren 175 ml destillierten Wassers verdünnt. Dann stellt man den pH-Wert auf 4,5 bis 5,0 durch Zusatz von Essigsäure ein. Dabei wird die Temperatur im Becherglas gegebenenfalls durch Zufuhr von Wärme konstant bei 50°C gehalten. Die Farbstoffmischung wird dann in einem hochtuorigen Mischer 30 Minuten lang gemischt. Danach wird die Mischung in einem Guß in einen 500 ml-Meßzylinder gegossen, wo sofort die gesamte Schaumhöhe gemessen wird. Nach 2 Minuten wird erneut die Schaumhöhe bestimmt. Ergebnis: Die Schaumhöhe ist von ursprünglich 45 ml auf 20 ml nach 2 Minuten zurückgegangen.

Dispergiertest (gemäß American Accociation of Textile Colorist and Chemist Standard Method)

2 g des Farbstoffpulvers werden bei 50°C in einem 400 ml Becherglas mit 10 ml destillierten Wassers vermischt. Danach werden bei der gleichen Temperatur portionsweise weitere Mengen destillierten Wassers zugesetzt, bis ein Gesamtvolumen von 180 ml erreicht ist. Der pH-Wert wird mittels Essigsäure auf 4,0 bis 4,5 eingestellt. Anschließend wird durch Zugabe von destilliertem Wasser bis zu einem Gesamtvolumen von 200 ml verdünnt. Die erhaltene Mischung wird dann bei 70°C während 5 bis 10 Minuten erhitzt und durch einen 9 cm-Büchnertrichter unter Verwendung eines Whatman ®-Filters Nr. 2, welches auf einem Whatman-Filter Nr. 4 lagert, bei einem Vakuum von 25 Zoll Quecksilber filtriert. Ergebnis: Die Filrationszeit beträgt 14 Sekunden.

Le A 19 745

**Beispiel 2** (Vergleich mit Beispiel 1)

93 g der Entschäumeremulsion, wie sie in Beispiel 1 beschrieben ist, werden in einem Guß zu den 664 g der ebenfalls in Beispiel 1 beschriebenen Farbstoffdispersion gegeben und ungefähr 4 Stunden verrührt, bis sich eine homogene Masse gebildet hat. Die resultierende Mischung wird unmittelbar auf die Zerstäuberscheibe eines Sprühtrockners gepumpt, in dem die gleichen Temperaturverhältnisse herrschen wie in dem in Beispiel 1 beschriebenen Trockner. Das erhaltene Farbstoffpulver enthält ebenfalls 2 Gew.-% Entschäumer.

**Schaumtest**

169 ml am Anfang; 170 ml nach 2 Minuten.

**Dispergiertest**

Die Filtrationszeit beträgt 65 Sekunden.

**Beispiel 3**

Eine wäßrige Lösung von Acid Black 172 mit einem Farbstoffgehalt von 14,6 % wird mittels einer Verdrängerpumpe bei einer Geschwindigkeit von 62 kg Lösung pro Stunde durch eine Einstoffdüse eines mit einem Ringkanalklassierer ausgerüsteten Sprühtrockner gepumpt. Gemäß Fig. 2 wird eine 12,5 %ige wäßrige Emulsion

Le A 19 745

eines partiell sulfonierten Mineralöls als Entstaubungsmittel aus dem Vorratsbehälter 2 mit Hilfe einer Dosierpumpe 3 in den Produktenstrom auf dem Wege von dem Farbstoffvorratsbehälter 1 hinter der Versorgungspumpe 4 bei einer Geschwindigkeit von 1,63 l/h eingespeist. Die Eingangstemperatur in dem Sprühtrockner 5 beträgt 200°C und die Ausgangstemperatur 100°C. Man erhält 9,05 kg Farbstoffgranulat pro Stunde welches 7 % Restfeuchtigkeit enthält. Das erhaltene Farbstoffpräparat ist freifließend und wenig staubend.

Beispiel 4   (Vergleich mit Beispiel 3)

1000 kg einer wäßrigen Lösung von Acid Black 172 wird mit 26,3 kg einer 12,5 %igen wäßrigen Emulsion eines partiell sulfonierten Mineralöls in einem Vorratstank während 4 Stunden innig vermischt. Die erhaltene Mischung wird direkt in den Sprühtrockner gepumpt, wo die gleichen Bedingungen herrschen wie in dem in Beispiel 3 beschriebenen Trockner. Wie in Beispiel 3 erhält man eine Farbstoffpräparation mit einem Restfeuchtigkeitsgehalt von 7 %. Das erhaltene Farbstoffgranulat neigt jedoch wesentlich stärker zum Stauben als die gemäß Beispiel 3 erhaltene Präparation.

Beispiel 5

214 g eines wasserfeuchten Preßkuchens von Disperse Red 60 (Farbstoffgehalt 75 %) wird mit 410 g Ligninsulfonat und 1100 g Wasser zu einer fließfähigen Masse verarbeitet. Die erhaltene Farbstoffanschlämmung wird wie in Beispiel 1 zunächst mit einer Rotorstator-

Le A 19 745

kolloidmühle und anschließend mit einer Permühle gemahlen. Man erhält 1715 g einer Farbstoffdispersion mit einer mittleren Teilchengröße von 0,3µ. Diese Dispersion wird mit einer Verdrängungspumpe auf die Zerstäuberscheibe eines Sprühtrockners gepumpt. Gleichzeitig wird eine 10 %ige wäßrige Emulsion eines Entstaubungsmittels, bestehend zu gleichen Gewichtsteilen aus einem partiell sulfonierten und einem nicht sulfonierten Mineralöl in die Versorgungsleitung gemäß Fig. 2 eingespeist, wobei die Dosierpumpe so eingestellt ist, daß pro 286 ml Farbstoffdispersion 10 ml Entstaubungsmittel eingeschleust werden. Die Eingangstemperatur des Sprühtrockners beträgt 185°C und die Ausgangstemperatur 85°C. Das erhaltene Farbstoffpulver enthält 1 % Entstaubungsmittel und 4 % Restfeuchte. Dieses staubarme Pulver weist nach 35-tägiger Lagerung bei Raumtemperatur im Filtriertest gemäß Beispiel 1 eine Filtrationszeit von 12 Sekunden auf.

Beispiel 6

Der Versuch gemäß Beispiel 5 wird wiederholt, jedoch wird das Entstaubungsmittel direkt dem Farbstofftank beigemischt. Im Filtriertest wird eine Filtrationszeit von 42 Sekunden ermittelt.

Patentansprüche

1) Verfahren zur Herstellung von staubarmen und/oder weniger zum Schäumen neigenden Farbstoffpulvern oder -granulaten, dadurch gekennzeichnet, daß man in die von Lösungen, Emulsionen oder Dispersionen der Farbstoffe durchströmte Versorgungsleitung auf dem Wege vom Vorratsbehälter zum Trocknungsaggregat kontinuierlich Entstaubungsmittel und/oder Entschäumer einspeist.

2) Verfahren nach Anspruch 1, dadurch gekennzeichnet, daß man die Entstaubungs- bzw. Entschäumungsmittel auf der Druckseite einer Versorgungspumpe einspeist.

3) Verfahren nach Anspruch 1, dadurch gekennzeichnet, daß man die Entstaubungs- bzw. Entschäumungsmittel auf der Saugseite einer Versorgungspumpe einspeist.

4) Verfahren nach Anspruch 1, dadurch gekennzeichnet, daß man die Einspeisung so vornimmt, daß die Kontaktzeit zwischen Farbstoff und Hilfsmittel in der Versorgungsleitung 1 Sekunde bis 7 Minuten, vorzugsweise 10 Sekunden bis 3 Minuten, beträgt.

5) Verfahren nach Ansprüchen 1 bis 3, dadurch gekennzeichnet, daß man als Trocknungsaggregate einen Sprühtrockner verwendet.

Le A 19 745

6) Verfahren nach Ansprüchen 1 bis 3, dadurch gekennzeichnet, daß man als Farbstoffe Dispersionsfarbstoffe einsetzt.

FIG. 1

FIG. 2